# EUROPEAN PATENT APPLICATION

(11) **EP 4 844 022 A1**
(43) Date of publication of application: **25.11.2026**
(21) Application number: 25178461.7
(22) Date of filing: 23.05.2025
(51) Int. Cl.: C08L 23/06

(54) **RECYCLATE IBC BLEND**

(71) Applicant: Basell Polyolefine GmbH, 50389 Wesseling (DE)
(72) Inventor: MANNEBACH, Gerd, 65926 Frankfurt/M (DE); WOLFS, Jonas, 65926 Frankfurt/M (DE); RASPUDIC, Stefan, 65926 Frankfurt/M (DE)
(74) Representative: LyondellBasell

(57) **Abstract**

The present invention relates to a polyolefin composition, comprising post-consumer recyclate material, a polyethylene enriched recyclate material, derived from Industrial / Intermediate Bulk Containers, blended with virgin Booster high-density polyethylene, being either a homo- or copolymer. The obtained polyolefin composition is having excellent mechanical properties, especially is having a FNCT value and therefore high mechanical stability and resistance compared to the starting recyclate material, as it is shown in Fig. 1.

## Description

The present invention relates to a polyolefin composition, comprising an IBC derived recycled polyethylene blended with a virgin Booster material, a high-density polyethylene, either being a copolymer or homopolymer, which is suitable to provide high quality applications, wherein the recyclate is derived from intermediate / industrial bulk containers (IBC).

### BACKGROUND OF INVENTION

The use of post-consumer recyclates often face significant challenges when it comes to the quality and purity needed for high-quality products. The issue lies in their inherent inconsistency and contamination derived from the different waste streams collected, which compromise their usability for producing high-quality new products. Despite advancements in recycling technologies, the material derived from consumer waste frequently does not meet the stringent standards required for manufacturing durable and reliable goods. This quality gap limits the potential for creating sustainable and premium products solely from recycled content, highlighting the need for innovative solutions and improved recycling processes.

Typically, a post-consumer recyclate (PCR) as feedstock (collected, shredded, and pelletized) has poor mechanical properties and is therefore not directly converted to a new product.

Further processing steps are therefore required to improve the quality of the recyclate and make it usable. That is the reason why, typically, a post-consumer recyclate material is blended with polyolefins of virgin origin, resulting in changes in viscosity, and other required mechanical and processing properties.

Unfortunately, changing one feature always changes others too. Therefore, increasing the viscosity for better processing e.g., also a degradation of mechanical properties appears. Which renders the obtained recycling material unusable for the original purpose. Also, the flow behavior of the material is affected. Materials with higher viscosity flow more slowly and less uniformly, which can result in uneven products and possible defects.

Therefore, there is still a high demand and need to find ways to apply recycled polyolefins which can be used for high quality applications, and mimic the properties of virgin polyolefins, fulfilling the requirements for high quality applications, by identifying suitable post-consumer recyclate and post-industrial recyclate for applications the waste can be integrated. Especially for re-using the obtained recycled material for use in the same applications as originally applied. Providing products, having advantageous properties susceptible to providing an industrial application.

### SUMMARY OF INVENTION

Surprisingly, it has been found that the inventive polyolefin composition comprising a blend comprising a recyclate and a virgin polyethylene, which can be used for producing again Intermediate and Industrial containers of high quality, especially Intermediate / Industrial bulk containers such as IBCs.
The benefit of the inventive polyethylene composition is that the MFR and the density does not change significantly, as known from recyclate blends in the state of the art. Therefore, the mechanical properties are far better compared to alternative grades.
This leads also to easy processing as the viscosity is not increased significantly as the MFR_{21.6} of recyclate derived from the IBCs and the MFR_{21.6} of the final polyolefin composition are in the same range (changes are only about 5 to 15 %).

By blending the recycled polyethylene, obtained from IBC waste and a virgin polyethylene Booster material, which is preferably a copolymer or homopolymer of a high-density polyethylene.

The polyolefin composition according to this invention mimics the specification of the high-quality high-density polyethylene grade for production of IBCs of virgin origin, as the density, the MFR_{21.6}, the swell ratio are kept constantly in a certain range.

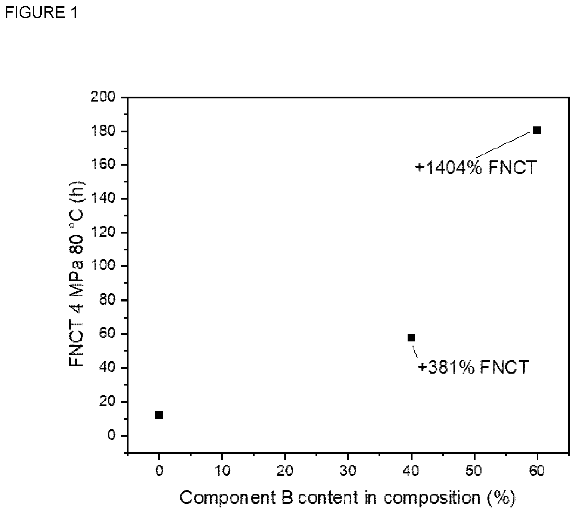

A brief description of the drawing is provided herewith. Figure 1 presents the increase in FNCT of the polyolefin composition compared to the starting PCR recyclate material derived from the recycled IBCs.

It is demonstrated that the starting material has an FNCT value of 12.0 h (measured at 4.0 MPa and 80°C). The polyolefin composition II comprising 60 % of PCR material and 40 % of the Booster material is having a FNCT value of 57.7 h which results in an increase of about 381%.

The polyolefin composition I, comprising 40 % of PCR material and 60 % of the Booster material, which results in a FNCT value of 180.5 h referring to an increase of about 1404%.

The polyolefin composition is comprising in the range of 20 % to 80 % of recycled high-density polyethylene (component (A)) and in the range of 80 % to 20 % of a virgin Booster material (component (B)), wherein the high density polyethylene is having a broad molecular weight distribution, in the range of 17 to 27.

In the sense of the present invention a Booster material is used to enhance the properties of recyclates that is incorporated / mixed / blended and the like into recycled materials to improve their performance characteristics. These products can enhance various properties in the articles provided, such as mechanical strength, durability, flexibility, and overall quality, making the recycled product more comparable to virgin materials. Booster materials are essential in the recycling industry as they help in creating high-quality recycled products that meet specific standards and requirements. Here, preferably the Booster material is used to increase preferably the FNCT of the polyethylene composition, while the other parameters and features of the recyclate such as density, swell ratio and MFR are only changed by 1.0 to 15.0 %, preferably by 2.0 to 12.0 %, preferably by 4.0 to 10.0 %.

A polyolefin composition, comprising
I. Component (A): a recyclate polyethylene, present in the range of 20 to 80%, preferably in the range of 30 to 70 %, preferably in the range of 40 to 60 %, having
   a. a density in the range of 0.941 to 0.949 g/cm³, preferably in the range of 0.942 to 0.948 g/cm³, preferably in the range of 0.943 to 0.947 g/cm³ (according to ISO 1183-1);
   b. a MFI_{21.6} in the range of 2.0 to 10.0 g/10 min, preferably in the range of 3.0 to 9.0 g/10 min, preferably in the range of 4.0 to 8.0 g/10 min (according to ISO 1133-1, 190°C, 21.6 kg); and
II. Component (B): multimodal high density polyethylene present in the range of 80 to 20 %, preferably in the range of 70 to 30 %, preferably in the range of 60 to 40 % of a, having
   a. a density in the range of 0.945 to 0.953 g/cm³, preferably in the range of 0.946 to 0.952 g/cm³, preferably in the range of 0.947 to 0.951 g/cm³ (according to ISO 1183-1);
   b. a MFI_{21.6} in the range of 3.5 to 11.5 g/10 min, preferably in the range of 4.5 to 10.5 g/10 min, preferably in the range of 5.5 to 9.5 g/10 min (according to ISO 1133-1, 190°C, 21.6 kg);
wherein the polyolefin composition is having
a. a density in the range of 0.942 to 0.950 g/cm³, preferably in the range of 0.943 to 0.949 g/cm³, preferably in the range of 0.944 to 0.948 g/cm³ (according to ISO 1183-1),
b. a MFR_{21.6} in the range of 3.0 to 10.0 g/10 min, preferably in the range of 4.8 to 8.5 g/10 min, preferably in the range of 6.0 to 7.0 g/10 min (according to ISO 1133-1, 190°C, 21.6 kg).

The polyolefin composition comprising component (A) a high-density polyethylene recyclate, meaning a waste derived from IBCs, comprising also residues of UV stability packages and component (B) high-density polyethylene show a melt flow index appropriate for blow molding, and injection moulding applications thereby implementing more improved work efficiency and low defect rate in the obtained article. Therefore, fewer phosphites are required for having protection of the phenolic antioxidant during processing, thus leaving the phenolic structure intact which contributes to the structure. However, phosphites do not specifically contribute to long term thermal stability, although they are used in additives to prevent degradation of the polymer during processing. Typically, phosphites are present in a range of 0.01 up to 0.1 wt% based on the overall weight of the polyolefin composition.

The polyolefin composition, as disclosed herein, is having
a. a MFR_{21.6} in the range of 3.0 to 10.0 g/10 min, preferably in the range of 4.8 to 8.5 g/10 min, preferably in the range of 6.0 to 7.0 g/10 min (according to ISO 1133-1, 190°C, 21.6 kg);
b. a Swell ratio in the range of 150 to 220 %, preferably in the range of 170 to 210 %, preferably in the range of 180 to 200 % (according to ISO 10147);
c. a FNCT in the range of 8.0 to 40 h, preferably in the range of 10 h to 30 h, preferably in the range of 15 to 25h (according to ISO 16770, measured at 80 °C, 4.0 MPa, 6.6% Dehyton PL);
d. an AZK (-30 °C) in the range of 140 to 180 kJ/m², preferably in the range of 145 to 170 kJ/m², preferably in the range of 150 to 160 kJ/m² (ISO 11443).

Preferably, the density, the swell ratio and the MFR of the final polyolefin composition matches the specification of the initial polyethylene used for production of the intermediate / industrial bulk containers, which are used after having fulfilled their life cycle here as recyclate (component (A)).

Polyolefin composition, according to any of the preceding claims, wherein the MFR of component (A), MFR(PCR)_{21.6} does not deviate from MFR(COMP)_{21.6} of the final polyolefin composition by more than 20 %, wherein the MFR(COMP)_{21.6} of the final polyolefin composition and MFR(PCR)_{21.6} of the PCR is the Melt Flow Rate at 21.6 kg, measured at 190°C according to ISO 1133-1.

The polyolefin composition, comprising component (A), wherein component (A) is a polyethylene enriched recyclate, preferably enriched of high density polyethylene, which is derived from post industrial waste and/or post-consumer waste. Preferably from injection or blow moulding applications. Preferably from large blow moulding applications, such as bulk containers, or intermediate / industrial bulk containers (IBCs), or water tanks and the like.

The polyolefin composition comprises preferably at least 50 wt%; more preferably at least 60 wt%; even more preferably at least 70 wt% of derived units of polyethylene. The remaining comonomers can be ethylene; 1-butene; 1-hexene or 1-octene derived units.

In an embodiment, the polymer composition for blow molding further comprises an additive commonly used in the art. Examples of additives may comprise antioxidants, UV absorber, UV stabilizer, lubricants, pigments, colorants, fillers, plasticizers, flow agents, antistatic agents, flame retardants, slap agents, antiblock agents, and the like. While the additive may be included at an appropriate amount within a range which does not impair the targeted physical properties.

Surprisingly, it has been found that the obtained polyolefin composition has an improved FNCT value (Full Notch Creep Test), compared to the original PCR material. In Figure 1 the increase in FNCT of the polyolefin composition comprising component (B) and component (A) is shown. It is clearly demonstrated the FNCT improvement compared to the initial recyclate starting material, derived from preferably from intermediate / industrial bulk containers. Improving the FNCT of the obtained polyolefin composition leads to high quality products with high mechanical stability and resistance.

The component (B), the virgin polyethylene has a weight average molecular weight in the range of 150,000 to 600,000 g/mol, preferably in the range of 200,000 to 550,000 g/mol, preferably in the range of 200,000 to 500,000 g/mol (measured with GPC).

The recycled polyethylene has an average molecular weight in the range of 150,000 to 600,000 g/mol, preferably in the range of 200,000 to 550,000 g/mol, preferably in the range of 200,000 to 500,000 g/mol (measured with GPC).

Polyolefin composition, comprising the component (B), the virgin multimodal high-density polyethylene, having
a. a Swell ratio in the range of 150 to 220 %, preferably in the range of 170 to 210 %, preferably in the range of 180 to 200 %;
b. a FNCT in the range of 8.0 to 40 h, preferably in the range of 10 h to 30 h, preferably in the range of 15 to 25h (according to ISO 16770, measured at 80 °C, 4.0 MPa, 6.6 % Dehyton PL);
c. an AZK (-30 °C) in the range of 150 to 160 kJ/m² (ISO 11443).

Furthermore, a process to obtain the polyolefin composition is disclosed herein. The process, for preparing the polyolefin composition, said process comprising the steps of
A) providing:
   A) a multimodal Booster virgin polyethylene (A),
      i. having a multimodal molecular weight distribution;
      ii. having a MFR_{21.6} in the range of 3.5 to 11.5 g/10 min, preferably in the range of 4.5 to 10.5 g/10 min, preferably in the range of 5.5 to 9.5 g/10 min (according to ISO 1133-1, 190°C, 21.6 kg);
   B) a polyethylene recyclate (B),
      having a MFR_{21.6} in the range of 3.0 to 10.0 g/10 min, preferably in the range of 4.8 to 8.5 g/10 min, preferably in the range of 6.0 to 7.0 g/10 min (according to ISO 1133-1, 190°C, 21.6 kg);
B) blending A) and B); and
C) melting and shaping the blend obtained in step B);
D) to obtain said polyolefin composition.

### DEFINITIONS

Post-Consumer Recyclate (PCR) is defined in the context of the present invention as a resin used by the consumer for its intended purpose, which has reached its end of use. The waste is generated from used industrial bulk containers, water tanks and the like, that is reclaimed, processed, shredded, washed several times with water, detergents, alkali solutions etc., to be used again in the same material for the same applications in a "closed loop".

Preferably, the recycled polyethylene composition does not contain less than 10 ppm of limonene and less than 3.0 wt% of polypropylene.

The term multimodal is having a broad distribution of molecular weights. This results in a polymer that has enhanced properties, such as improved mechanical strength, better processability, and increased resistance to environmental stress cracking. Multimodal polyethylene is often used in applications where high performance and durability are required, such as in packaging, pipes, and automotive components.

### CHARACTERIZATION METHODS

### Melt Flow Rate (MFR)

Measured according to ISO 1133-1 at 190 °C with a load of 2.16 kg, 5 kg, 21.6 kg unless otherwise specified.

### FNCT

FNCT is standardized under ISO 16770 (conducted at 80 °C; and 90 °C), which provides detailed guidelines for conducting the test. The used detergent is Dehyton PL (6.6 %). This method involves subjecting a notched specimen to a constant tensile load in a specific environment, such as a surfactant solution, at an elevated temperature. The test measures the time to failure of the specimen, providing an indication of the material's resistance to environmental stress cracking. The procedure includes preparing the specimen, notching it, immersing it in the test environment, and applying the load until failure occurs.

### AZK (Average Zero Shear Viscosity)

AZK measurements were performed typically around 150 to 190 °C. The measurement can be referenced to standards such as ISO 11443 and ASTM D4440, which provide guidelines for measuring the viscosity of polymers using a rotational rheometer.

### Comonomer Content

The comonomer content was determined by means of IR in accordance with ASTM D 6248 98, using an FT-IR spectrometer Tensor 27 from Bruker, calibrated with a chemometric model, for instance for determining ethyl- sidechains in PE for butene-1 as comonomer and butyl- sidechains in PE for hexene-1 as comonomer.

### EXAMPLES

| **Descri ption** | **Sample Ratio PCR : Booster** | **Density [g/cm³]** | **Swell ratio [%]** | **MFR 21.6kg [g/10min]** | **FNCT 80°C, 4.0 MPa** | **FNCT 90°C, 4.0 MPa** | **AZK - 30°C [kJ/m²]** |
|---|---|---|---|---|---|---|---|
| Compo sition I | 40% : 60% | 0.9469 | 188 | 6.84 | 180.5 | | 158.5 |
| Compo sition II | 60% : 40% | 0.9462 | 191 | 6.4 | 57.7 | | 155.5 |
| PCR | PCR Material | 0.9450 | 208 | 6.05 | 12.0 | | 127.3 |
| Booste r | Booster Material | 0.9483 | 196 | 7.56 | too high to measure | 1016.1 | 149.1 |
| | | | | | | | |
| Refere nce | Comp. Material | 0.9454 | 204 | 6.22 | 14.3 | | 156.4 |
| Refere nce | Comp. Material | 0.9444 | 206 | 6.03 | 22.2 | | 160.6 |
| Refere nce | Comp. Material | 0.9443 | 202 | 5.5 | 20.1 | | 154.7 |
| Refere nce | Comp. Material | 0.9451 | 207 | 5.87 | 15.9 | | 154.5 |

## Claims

1. A polyolefin composition, comprising a
I. Component (A): present in the range of 20 to 80%, preferably in the range of 30 to 70 %, preferably in the range of 40 to 60 % of a recyclate polyethylene, having
a. a density in the range of 0.941 to 0.949 g/cm³, preferably in the range of 0.942 to 0.948 g/cm³, preferably in the range of 0.943 to 0.947 g/cm³ (according ISO 1183-1);
b. a MFR_{21.6} in the range of 2.0 to 10.0 g/10 min, preferably in the range of 3.0 to 9.0 g/10 min, preferably in the range of 4.0 to 8.0 g/10 min (according to ISO 1133-1, 190°C, 21.6 kg);
II. Component (B): present in the range of 80 to 20 %, preferably in the range of 70 to 30 %, preferably in the range of 60 to 40 % of a multimodal high-density polyethylene, having
a. a density in the range of 0.945 to 0.953 g/cm³, preferably in the range of 0.946 to 0.952 g/cm³, preferably in the range of 0.947 to 0.951 g/cm³ (according to ISO 1183-1);
b. a MFR_{21.6} in the range of 3.5 to 11.5 g/10 min, preferably in the range of 4.5 to 10.5 g/10 min, preferably in the range of 5.5 to 9.5 g/10 min (according to ISO 1133-1, 190°C, 21.6 kg);
wherein the polyolefin composition is having
a. a density in the range of 0.942 to 0.950 g/cm³, preferably in the range of 0.943 to 0.949 g/cm³, preferably in the range of 0.944 to 0.948 g/cm³ (according to ISO 1183-1),
b. a MFR_{21.6} in the range of 3.0 to 10.0 g/10 min, preferably in the range of 4.8 to 8.5 g/10 min, preferably in the range of 6.0 to 7.0 g/10 min (according to ISO 1133-1, 190°C, 21.6 kg).

2. Polyolefin composition, according to any of the preceding claims, wherein the composition is having
a. a MFR_{21.6} in the range of 3.0 to 10.0 g/10 min, preferably in the range of 4.8 to 8.5 g/10 min, preferably in the range of 6.0 to 7.0 g/10 min (according to ISO 1133-1, 190°C, 21.6 kg);
b. a Swell ratio in the range of 150 to 220 %, preferably in the range of 170 to 210 %, preferably in the range of 180 to 200 % (according to ISO 10147);
c. a FNCT in the range of 8.0 to 40 h, preferably in the range of 10 to 30 h, preferably in the range of 15 to 25h (according to ISO 16770, measured at 80 °C, 4.0 MPa, 6.6% Dehyton PL);
d. an AZK (-30 °C) in the range of 150 to 160 kJ/m² (ISO 11443).

3. Polyolefin composition, according to any of the preceding claims, wherein the MFR of component (A), MFR(PCR)_{21.6} does not deviate from MFR(COMP)_{21.6} of the final polyolefin composition by more than 25 %, wherein the MFR(COMP)_{21.6} of the final polyolefin composition and MFR(PCR)_{21.6} of the PCR is the Melt Flow Rate at 21.6kg, measured at 190 °C according to ISO 1133-1.

4. Polyolefin composition, according to any of the preceding claims, wherein component (A), is a polyethylene enriched post-consumer recyclate.

5. Polyolefin composition, according to any of the preceding claims, wherein component (A) is derived from injection or blow moulding applications, preferably from containers, preferably from intermediate / industrial bulk containers (IBCs) made from high density polyethylene.

6. Polyolefin composition, according to any of the preceding claims, wherein component (B), a virgin high density polyethylene, having
a. a Swell ratio in the range of 170 to 220 %, preferably in the range of 180 to 210 %, preferably in the range of 185 to 210 %;
b. a FNCT higher than 100 h, preferably higher than 200 h, preferably higher than 400 h (according to ISO 16770, measured at 90 °C, 4.0 MPa, 6.6% Dehyton PL);
c. an AZK (-30 °C) in the range of 150 to 160 kJ/m² (ISO 11443).

7. The process, for preparing a polyolefin composition, said process comprising the steps of
A) providing a multimodal Booster virgin polyethylene (A),
i. having a multimodal molecular weight distribution;
ii. having a MFR_{21.6} in the range of 3.5 to 11.5 g/10 min, preferably in the range of 4.5 to 10.5 g/10 min, preferably in the range of 5.5 to 9.5 g/10 min (according to ISO 1133-1, 190°C, 21.6 kg);
and a polyethylene recyclate (B),
having a MFR_{21.6} in the range of 3.0 to 10.0 g/10 min, preferably in the range of 4.8 to 8.5 g/10 min, preferably in the range of 6.0 to 7.0 g/10 min (according to ISO 1133-1, 190°C, 21.6 kg);
B) blending (A) and (B); and
C) melting and shaping the blend obtained in step B);
D) to obtain said polyolefin composition.
